# EUROPEAN PATENT SPECIFICATION

(11) **EP 2 910 453 B1**
(45) Date of publication and mention of the grant of the patent: **11.07.2018**
(21) Application number: 14156577.0
(22) Date of filing: 25.02.2014
(51) Int. Cl.: B62D 15/02, B60W 30/06, G05D 1/00, G05D 1/02, G08G 1/14

(54) **Method and system for autonomously guiding a vehicle through a parking area**
Verfahren und System zum autonomen Führen eines Fahrzeugs durch einen Parkbereich
Procédé et système de guidage d'un véhicule autonome à travers une zone de stationnement

(43) Date of publication of application: 26.08.2015
(73) Proprietor: Volvo Car Corporation, 40531 Göteborg (SE)
(72) Inventor: Thor, Mikael, 41652 Göteborg (SE); Brännström, Mattias, 41758 Göteborg (SE)
(74) Representative: Volvo Car Corporation

(56) References cited:
- EP-A1- 2 136 275
- DE-A1-102010 033 215
- JP-A- 2001 005 523
- JP-A- 2005 193 742
- US-A1- 2002 171 562
- US-A1- 2010 156 672
- US-A1- 2014 018 992

## Description

### TECHNICAL FIELD

The present disclosure relates to a parking area guiding system of an autonomous vehicle and a method performed therein for autonomously guiding the vehicle through a parking area.

### BACKGROUND

In recent years, development of autonomous vehicles has been, and increasingly is, growing rapidly. Autonomous vehicles, also commonly known as autonomously driven vehicles, driverless vehicles, self-driving vehicles, or robot vehicles, are known to sense their surrounding with such techniques as e.g. radar, lidar, GPS and/or computer vision. Advanced control systems may interpret sensory information to identify appropriate paths, as well as obstacles. For instance, an autonomous vehicle may create a map of its surroundings based on sensory input, allowing the vehicle to keep track of its position even when conditions change or when it enters uncharted environments.

US 2014/0018992, considered as the closest prior art, discloses transitioning from a manual mode to an autonomous mode, and in further detail how transitioning may include stopping a vehicle on a predefined landing strip and detecting a reference indicator. Based on the reference indicator, the vehicle may be able to know it's exact position and moreover use the reference indicator to obtain an autonomous vehicle instruction via a URL. After the vehicle knows its precise location and has an autonomous vehicle instruction, it can operate in autonomous mode.

As a natural step, as well semi-automatic and fully automatic parking is evolving step by step into parking functionality where the driver does not need to be present in the vehicle when the vehicle parks itself. WO 2013/083907, for instance, relates to parking assistance for a motor vehicle in a parking space being arranged on one of the sides of a roadway.

Furthermore, development is ongoing with regards to a vehicle not only being able to park itself, but also being able to navigate through a parking area to find, and park, in an available parking space. The navigation may be performed by different means, e.g. by navigating using a map which is provided by the parking area or by using advanced simultaneous location and map building techniques. Although research on building maps of parking areas using simultaneous location and map building techniques is ongoing, plenty of work remains before this technique may be used in real-world applications. Hence, the autonomous vehicle may need some assistance from the parking area to facilitate the navigation. One approach to such a solution may be to request the parking area to provide a detailed map describing how to navigate, and the location of available, and/or possibly available, parking spaces. Another approach may be to equip the parking area with sensors which may be utilized to communicate with the vehicle and guide said vehicle through the parking area.

US 2010/0156672, for instance, discloses a system for providing an auto valet parking service of a vehicle in a parking place including a plurality of slots. Said system includes a plurality of vehicle guide sensors that are installed in the parking place and that guide driving of the vehicle, and a plurality of parking situation sensing sensors that are installed in each of the plurality of slots and that sense whether vehicles are parked in the plurality of slots or not. Said system furthermore includes a service server that manages sensing information sensed from the plurality of vehicle guide sensors and the plurality of parking situation sensing sensors, and determines a movement path of the vehicle and a parking slot of the vehicle of the plurality of slots based on the sensing information, and provides the movement path of the vehicle and the parking slot of the vehicle to the vehicle.

At a potential launch of parking functionality where the vehicle both navigates through a parking area and parks by itself, there may be relatively few vehicles that are equipped with such systems. As a result of this, it may be difficult to motivate large investments in intelligent parking areas that offer the information and support that is necessary for the previously mentioned solutions. Accordingly, there is a need for a cost effective and robust alternative enabling the vehicle to both navigate through a parking area and park by itself, according to which alternative the investment in infrastructure may be kept at a minimum.

### SUMMARY OF THE INVENTION

It is therefore an object of embodiments herein to provide an improved approach of enabling autonomous guiding of a vehicle through a parking area.

According to a first aspect of embodiments herein, the object is achieved by a method according to claim 1. Thereby, by detecting markers which are continuously and/or intermittently arranged on the floor and/or the ground, guiding indicators of said markers indicating guiding instructions for the vehicle along the track are detectable, and subsequently interpretable, in a convenient manner. Accordingly, there is suggested efficient, cost effective, robust and safe navigation through the parking area. Furthermore, investment in parking area infrastructure may be kept at a minimum, such as reduced requirements on e.g. sensor systems of the parking area infrastructure, as well as reduced requirements on control algorithms. For that reason, an improved approach of enabling autonomous guiding a vehicle through a parking area is provided.

The technical features and corresponding advantages of the above mentioned method will be discussed in further detail in the following.

Since the parking area guiding system of the autonomous vehicle is intended for autonomously guiding the vehicle through a parking area comprising at least one parking space, along at least a segment of a predefined track, an approach is provided which enables for vehicle navigation through a parking area without the necessity of driver interaction. An "autonomous vehicle" is throughout this disclosure intended to be interpreted to refer to a vehicle capable of fulfilling the human driver capabilities of a traditional vehicle, such as being capable of sensing its environment and navigating without human input. The referred to vehicle may be any arbitrary autonomous vehicle, for instance an autonomous engine-propelled vehicle, such as e.g. a car, truck, lorry, van, bus etc. intended to be autonomously driven on a public road. Furthermore, the referred to "parking area" may by any arbitrary parking area of any size and any number of floors and parking spaces, such as for instance an outdoor parking lot and/or a parking garage. By "predefined track" is throughout this disclosure intended at least an arranged trail along which the vehicle is intended to navigate. The predetermined track may be arranged in any arbitrary manner considered appropriate and/or convenient through the parking area, and may comprise any number of track branches suitable for the implementation at hand. For instance, the track may be arranged such that it, through a single or plurality of branches, passes by at least some, and preferably all, of the parking spaces of the parking area. Furthermore, by a "segment" of the predefined track is throughout this disclosure intended at least a section of the track, which section for instance may range from tenths of centimetres up to several meters or more in the lengthwise direction of the track.

Since the track comprises one or several markers continuously and/or intermittently arranged on a floor and/or the ground of the parking area, a solution is provided which reduces the necessity of an advanced parking area infrastructure commonly needed for autonomous vehicle navigation. That is, since the track comprises one or several markers continuously and/or intermittently arranged on a floor and/or the ground, a trail is suggested comprising continuous and/or distinct markers, which may be easily detectable. "Markers" refers to any arbitrary continuously or intermittently arranged identifiers constituting the track, such as markings and/or bumps of arbitrary shape and size, distributed on the floor and/or ground. Furthermore, "intermittently arranged" is throughout this disclosure intended to indicate that the markers, if not continuously arranged, may be arranged semi-continuously, i.e. in relative proximity to one another. "Continuously" is furthermore intended to likewise include as well "essentially continuously", i.e. that said markers may be continuously arranged on the floor and/or ground with minor deviations from strict continuity. The "floor" and/or the "ground" are intended to refer to at least ground sections of the parking area across which a vehicle may travel.

Since the parking area guiding system detects, by means of a sensor unit comprised in the parking area guiding system, at least one selected marker associated with a selected segment of the track, wherein the selected marker comprises a guiding indicator indicating a vehicle guiding instruction for the selected segment, detection of a guiding indicator incorporating navigation information is enabled. That is, in detecting the selected marker, subsequently a guiding indicator associated with the selected segment is detected, from which guiding indicator navigation guidance for the selected segment may be extracted. "Associated with" is here intended to be interpreted to likewise include at least "in front of", "close to", "nearby", "in the vicinity of", "surrounding", and "affecting". The referred to "sensor unit" may be any arbitrary sensor unit which to some extent may be comprised in one or a combination of suitable electronic devices, such as e.g. one or several integrated arbitrary electronic control unit (ECU) nodes. The sensor unit may furthermore comprise one or several sensors arranged in proximity to one another or distributed throughout the vehicle as appropriate for the implementation at hand. The sensor unit supports techniques such as vision sensing, e.g. camera, radar, lidar, laser and/or computer vision etc. Furthermore, the "selected marker" may refer to any arbitrary marker along the track positioned at any arbitrary distance from the current position of the vehicle, for instance at a distance of zero meters up to e.g. 30 meters or more. For instance, the selected marker may refer to a marker relatively far ahead of the vehicle should the vehicle be travelling with relatively high speed along the track, whereas the selected marker may refer to a marker relatively close ahead, or even a marker positioned underneath the vehicle, should the vehicle be travelling with relatively low speed. Additionally, the referred to "selected segment" of the track may be any section along the track associated with the selected marker. The selected segment may, for instance, be of the same length as the selected marker, and even overlapping with the selected marker along the track, or for instance extend an arbitrary distance beyond the selected marker in the lengthwise direction of the track. Alternatively, the selected segment may be positioned at an arbitrary distance ahead of the selected marker in the lengthwise direction of the track. By "guiding indicator" is throughout this disclosure intended an indicator which indicates a vehicle guiding instruction subsequently extractable by the autonomous vehicle. Such a vehicle guiding instruction indicates an intended navigational direction for said selected section of the track. The guiding indicator may for instance incorporate one or several specific colors, or one or a combination of 2- and/or 3-dimensional arrows, patterns, dots, symbols, signs etc., which the parking area guiding system may be adapted to interpret. The guiding indicator may further be identical to the selected marker, i.e. the guiding indicator may constitute the selected marker.

Furthermore, according to an alternative example, a plurality of guiding indicators of a plurality of markers may, in combination, indicate vehicle guiding instructions. That is, a guiding indicator of a first marker may, for instance, incorporate a e.g. dot of a first size, a guiding indicator of a second marker a dot of a second increased size, a guiding indicator of a third marker a dot of a third even further increased size, etc., whereby, in combination, said dots may indicate an intended navigational direction.

Since the parking area guiding system further autonomously guides, by means of a guiding unit comprised in the parking area guiding system, the autonomous vehicle along the selected segment based on the guiding indicator, the vehicle may be autonomously guided along said selected segment in accordance with the vehicle guiding instruction associated therewith. Accordingly, with the sensor unit repeatedly detecting markers while the autonomous vehicle is travelling ahead along the track, and with the guiding unit subsequently repeatedly navigating in accordance with the corresponding guiding indicators, the vehicle may navigate along parts of the track or the entirety thereof in an autonomous manner. The guiding unit may be comprised in one or a combination of suitable electronic devices, such as e.g. one or several integrated arbitrary electronic control unit (ECU) nodes, and if preferred and/or suitable, associated with the previously mentioned sensor unit. "Based on" is throughout this disclosure intended to be interpreted to likewise include at least "utilizing", "considering" and "taking into account".

According to an embodiment, the track may range from a vehicle entry section to a vehicle exit section of the parking area. Thereby, e.g. a driver of the vehicle may "drop off" the vehicle at such an entry section, upon which autonomous navigation as described in the foregoing may take place. In a similar manner, said driver may "pick up" the vehicle at such an exit section, which for instance may take place subsequent a parking session and autonomous navigation of the vehicle to said exit section. The entry section may for instance be arranged in the vicinity of an entry to said parking area, and the exit section in a similar manner arranged in the vicinity of an exit thereof. If appropriate and/or preferred considering the layout of the parking area, the entry and exit sections may even be one and the same. According to some embodiments, the track may comprise a plurality of entry sections and/or exit sections, whereby the vehicle may enter and/or exit the track where suitable or preferred. Alternatively and/or additionally, the track may be entered or exited at any arbitrary part of the track not associated with said entry and/or exit sections. Thereby, e.g. the driver may choose to enter or exit the track at any arbitrary part of the track while remaining in the vehicle, whereby he or she may choose to switch from manual to autonomous driving, and/or vice versa, in a flexible manner.

According to another embodiment, the sensor unit may comprise at least one vision sensor, e.g. a camera. Thereby, the parking area guiding system is adapted to in a convenient manner detect and extract guiding instructions from the selected marker, i.e. from the corresponding guiding indicator, for subsequent interpretation thereof. The vision sensor may be arbitrarily arranged throughout the vehicle, for instance arranged in a protected position supporting a substantially clear view, such that a clear view of the track may be provided. According to embodiments herein, the vision sensor may be arranged behind the windscreen in the vicinity of, or be embedded with, the rear view mirror.

According to yet another embodiment, at least some of the markers may be visually detectable to a human eye. Thereby, by the markers being visually detectable, the markers may be detected by the sensor unit in a convenient manner. Furthermore, by the track being visible, object interaction may be facilitated in that other road and/or parking area users such as drivers, passenger, pedestrians, cyclists etc. may comprehend how said track is distributed across the ground and/or floor. Accordingly, one may be made aware of how an autonomous vehicle may be expected to navigate along the track, and subsequently, an intended route of the autonomous vehicle. Additionally, by the provision of a visual robust reference of the vehicles planned path, one may even choose to stay clear thereof.

According to still another embodiment, at least some of the markers may be distributed to form one or several continuous and/or intermittent straight and/or curved lines, which markers, if intermittently distributed, preferably are separated by a maximum distance of 2 meters, more preferred a maximum distance of 1 meter, and most preferred a maximum distance of 30 cm. Thereby, by markers forming a line, an efficient and straightforward "line following" approach is suggested. As previously discussed, "continuously" is intended to likewise include as well "essentially continuously", i.e. that said markers may be continuously arranged on the floor and/or ground with minor deviations from strict continuity.

According to one embodiment, at least some of the markers are 2-dimensional, e.g. comprising paint provided on the floor and/or the ground. Thereby, by the markers being 2-dimensional, an approach is suggested which is cost effective as well as robust, with no obstacles protruding above ground and/or floor level. By painting on the floor and/or ground, a variety of color combinations and/or e.g. patterns may be provided in a convenient and flexible manner to provide markers suitable for the parking area at hand. "2-dimensional" is throughout this disclosure intended to likewise include as well "essentially 2-dimensional", i.e. that said markers may have minor deviations from being strictly 2-dimensional, e.g. the thickness of a paint layer.

According to another embodiment, the selected marker may further comprise a searching indicator indicating a parking space searching instruction for the selected segment. Thereby, it is suggested that in addition to the selected marker comprising a guiding indicator incorporating navigation information for the selected segment, the selected marker additionally comprises a searching indicator incorporating information with regards to searching for a vehicle parking space. That is, in detecting the selected marker, subsequently a searching indicator associated with the selected segment is detected, from which parking space searching guidance relating to searching for a parking space may be extracted. Accordingly, when the selected marker comprises a searching indicator in addition to a guiding indicator, the parking area guiding system may be able to extract from the selected marker not only guiding information associated with the selected segment, but information related to searching for a parking space in said selected segment. By "searching indicator" is throughout this disclosure intended an indicator which indicates a parking space searching instruction subsequently extractable by the autonomous vehicle. Such a parking space searching instruction may, for instance, indicate that the parking area guiding system preferably should search for an available parking space in said selected section. The searching indicator may for instance incorporate one or several specific colors, or one or a combination of 2- and/or 3-dimensional arrows, patterns, dots, symbols, signs etc., which the parking area guiding system may be adapted to interpret. The guiding indicator and the searching indicator may be arbitrarily arranged in relation to one another, for instance separated, or alternatively, incorporated in the one and same e.g. pattern. As an example, markers of portions of the track not passing by parking spaces may incorporate only guiding indicators, whereas markers of portions of the track which do pass by parking spaces may, in addition to guiding indicators, incorporate searching indicators.

According to a further embodiment, the parking area guiding system may further initiate an autonomous search for an available parking space, by means of a search initiation unit comprised in the parking area guiding system, based on the searching indicator. Thereby, the parking area guiding system may initiate an autonomous search for an available parking space in the selected segment in accordance with the parking space searching instruction associated therewith. Accordingly, with the sensor unit repeatedly detecting markers while the autonomous vehicle is travelling along the track, i.e. while the guiding unit repeatedly navigates in accordance with the corresponding guiding indicators, and with the search initiation unit meanwhile subsequently initiating searches for an available parking space in accordance with the corresponding searching indicator, the vehicle may be triggered to search for a parking space along parts of the track or the entirety thereof in an autonomous manner. In interpreting the searching instruction, the parking area guiding system may hence be triggered to be in a "search mode" while travelling along the track, whereas in absence of the searching instruction, i.e. with the selected marker comprising only the guiding instruction, the parking area system may be triggered to be in a "navigation mode" and hence travel along the track without searching for a parking space. The referred to "search initiation unit" may be any arbitrary unit which to some extent may be comprised in one or a combination of suitable electronic devices, such as e.g. one or several integrated arbitrary electronic control unit (ECU) nodes. "Based on" is, as previously discussed, intended to be interpreted to likewise include at least "utilizing", "considering" and "taking into account".

According to one embodiment, the parking area guiding system may further receive, by means of a receiving unit comprised in the parking area guiding system, an auxiliary input, wherein the previously mentioned autonomous guiding and/or previously mentioned initiation of an autonomous search additionally is based on the auxiliary input, which auxiliary input indicates preferences of the parking area. Thereby, in addition to taking into account the guiding indicator for autonomously guiding the vehicle along the track, and/or in addition to taking into account the searching indicator for initiating an autonomous search for a parking space, the parking area guiding system may also consider other input, i.e. said auxiliary input, received by the receiving unit. The "auxiliary input" relates to preferences of the parking area, and may comprise tuning parameters such as e.g. preferred parking spaces, blacked out parking spaces, prioritized parking floors, shortest way along the track to the exit section etc. For instance, the auxiliary input may comprise the layout of the track of the parking area, and further e.g. a suggested currently shortest route to find an available parking space. By the auxiliary input comprising the layout of the track, redundancy is provided should the track have been manipulated. Furthermore, the auxiliary input may for instance be vehicle specific, user specific, relate to date and/or time, relate to amount of parking fee paid etc. Accordingly, the auxiliary input may be taken into consideration to tune the navigational and/or searching behaviour of the parking area guiding system. The auxiliary input may for instance be provided by a communication center, and the receiving unit may, for instance, support receiving the auxiliary input wirelessly. The "receiving unit" may be any arbitrary unit which to some extent may be comprised in one or a combination of suitable electronic devices, such as e.g. one or several integrated arbitrary electronic control unit (ECU) nodes. Again, "based on" is, as previously discussed, intended to be interpreted to likewise include at least "utilizing", "considering" and "taking into account".

According to a second aspect of embodiments herein, the object is achieved by a parking area guiding system according to claim 10.

According to a further embodiment, the sensor unit may comprise at least one vision sensor, e.g. a camera.

According to yet another embodiment, the parking area guiding system may further comprise a search initiation unit adapted for initiating an autonomous search for an available parking space, based on the searching indicator.

According to still another embodiment, the parking area guiding system may further comprise a receiving unit adapted for receiving an auxiliary input, wherein the autonomously guiding and/or the initiating an autonomous search additionally is based on the auxiliary input, which auxiliary input indicates preferences of the parking area.

Similar advantages as those mentioned in the foregoing correspondingly apply to the above embodiment related to the second aspect, why these are not further discussed.

According to a third aspect of embodiments herein, the object is achieved by an autonomous vehicle comprising the parking area guiding system described in the foregoing. Yet again, similar advantages as those mentioned in the foregoing correspondingly apply, why these are not further discussed.

According to a fourth aspect of embodiments herein, the object is achieved by a method according to claim 15. Once again, similar advantages as those mentioned in the foregoing correspondingly apply, why these are not further discussed.

According to a fifth aspect of embodiments herein, the object is achieved by a marker provision unit adapted to perform the method according to claim 15. Once again, similar advantages as those mentioned in the foregoing correspondingly apply, why these are not further discussed.

### BRIEF DESCRIPTION OF THE DRAWINGS

The various aspects of the non-limiting embodiments of the invention, including particular features and advantages, will be readily understood from the following detailed description and the accompanying drawings, in which:
Figure 1 illustrates an exemplifying parking area in which is arranged a track comprising one or several markers and an autonomous vehicle comprising a parking area guiding system according to embodiments of the disclosure;
Figure 2 illustrates exemplifying markers according to embodiments of the disclosure;
Figure 3 is a schematic block diagram illustrating a parking area guiding system according to embodiments of the invention;
Figure 4 is a flowchart depicting an exemplifying method for autonomously guiding a vehicle through a parking area according to embodiments of the disclosure;
Figure 5 is a flowchart depicting an exemplifying method for providing markers on a floor and/or ground of a parking area according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to autonomously guiding a vehicle through a parking area, there will be disclosed an approach for efficient, cost effective, robust and safe navigation through said parking area.

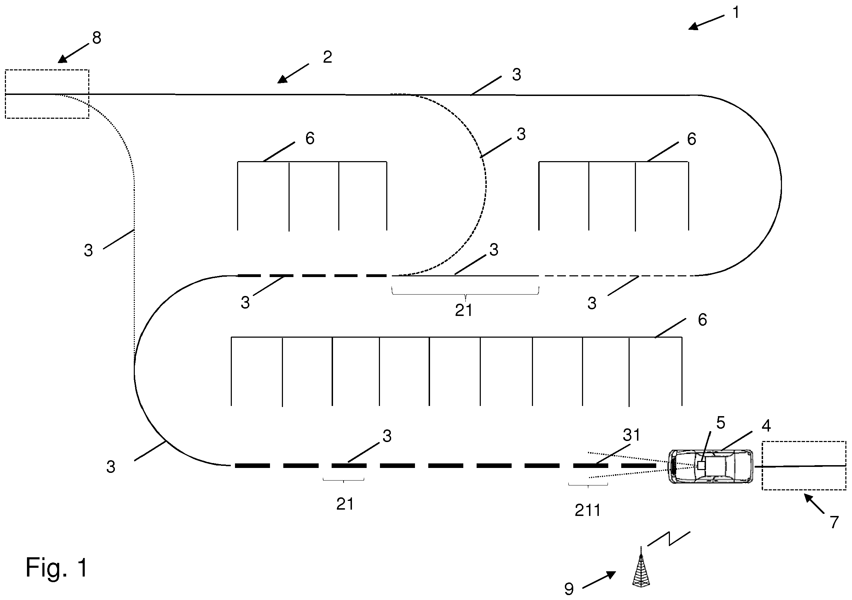

Referring now to the figures and **Figure 1** in particular, there is depicted an exemplifying **parking area 1**, in which is arranged a **track 2** comprising one or several **markers 3** and an **autonomous vehicle 4** comprising a **parking area guiding system 5** according to embodiments of the disclosure. The parking area 1 in the exemplifying embodiment is a one plane outdoor parking lot, although according to alternative embodiments, the parking area may be of a varying size, of an arbitrary number of floors, etc. The parking area 1 comprises at least one **parking space 6**, here a plurality thereof, which parking space 6 for instance is intended for one vehicle, and the parking spaces 6 may be arbitrarily distributed. The exemplifying track 2 of Figure 1 meanders through the parking area 1, and by being divided into a plurality of track branches, the track 2 passes by all of the parking spaces 6. In the exemplifying embodiment, the track 2 ranges from a **vehicle entry section 7** to a **vehicle exit section 8** of the parking area 1. Also depicted in Figure 1 is a **communication center 9**, adapted to provide auxiliary input indicating preferences of the parking area 1, to the parking area guiding system 5.

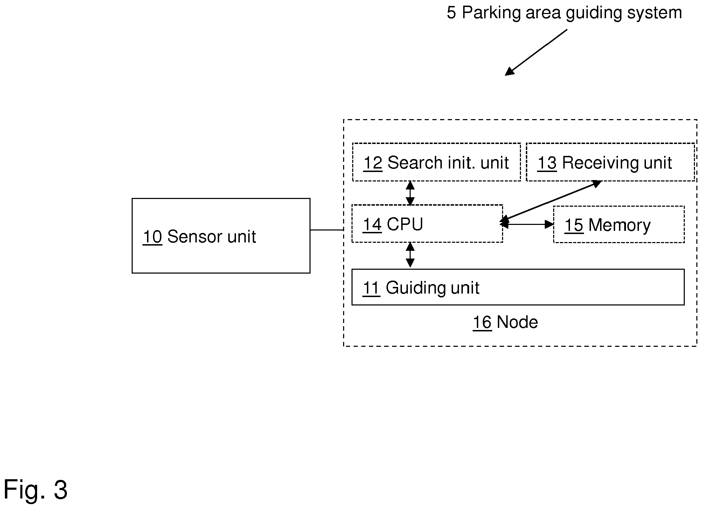

The autonomous vehicle 4, here an autonomous car, comprises as previously indicated a parking area guiding system 5. The parking area guiding system 5 of the autonomous vehicle 4, which will be described in further detail later on with reference to Figure 3, is adapted for autonomously guiding the vehicle 4 through the parking area 1, along at least a **segment 21** of the predefined track 2. A segment 21 of the track 2 may for instance range from tenths of centimetres up to several meters or more in the lengthwise direction of the track 2. Furthermore, the track 2 may comprise any arbitrary number of segments 21, as preferred or appropriate for the implementation at hand. The track 2 comprises as previously indicated one or several markers 3, here a plurality thereof, which markers 3 are continuously and/or intermittently arranged on a floor and/or the ground of the parking area 1. In the exemplifying embodiment, the markers 3 are, in some parts of the track 2, continuously arranged, and in other parts intermittently arranged. Also depicted in Figure 1 is an exemplifying **selected marker 31** associated with a **selected segment 211** of the track 2. It should be noted that the selected marker 31 may be represented by any of the markers in the illustration, and the selected segment 211 any segment 21 associated therewith.

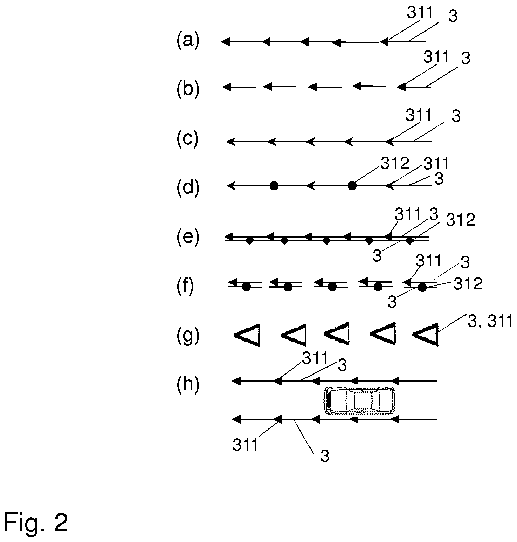

At least some of the markers 3 are distributed to form one or several continuous and/or intermittent straight and/or curved lines, which markers, if intermittently distributed, preferably are separated by a maximum distance of 2 meters, more preferred a maximum distance of 1 meter, and most preferred a maximum distance of 30 cm. In the exemplifying embodiment, all of the markers 3 are distributed to form continuous and/or intermittent straight and/or curved lines. Additionally, at least some of the markers 3 are 2-dimensional, in Figure 1 all markers 3, e.g. comprising paint provided on the floor and/or the ground of the parking area 1. The markers 3 are in the illustrated example visually detectable to a human eye. The markers 3 will now be described in further detail with reference to Figure 2.

**Figure 2** illustrates exemplifying markers 3 according to embodiments of the disclosure. (a) - (h) depicts varying designs, shapes, forms etc., which the markers 3 may take on. It should be noted that the illustrated embodiments are exemplifying, and that numerous other combinations likewise are within the scope.
**(a)** The markers 3 of the illustrated embodiment are continuously arranged, and each has the form of a 2-dimensional arrow. Each marker 3 comprises a **guiding indicator 311,** which will be further explained below, and the guiding indicator 311 here is represented by an arrowhead of a first exemplifying type. According to alternative embodiments, a guiding indicator may be represented by the marker 3 itself, whereby the guiding indicator in the shown embodiment would be represented by an entire arrow rather than an arrowhead.
**(b)** The markers 3 of the shown embodiment are intermittently arranged, and each has the form of a 2-dimensional arrow. A guiding indicator 311 is here represented by an arrowhead of the previously mentioned first exemplifying type.
**(c)** The markers 3 of the illustrated embodiment are continuously arranged, and each has the form of a 2-dimensional arrow. A guiding indicator 311 is here represented by an arrowhead of a second exemplifying type.
**(d)** The markers 3 are the shown embodiment are continuously arranged, and each has the form of a 2-dimensional line incorporating an arrowhead as well as an exemplifying "dot" of a first type. A guiding indicator 311 is here represented by an arrowhead, while a dot represents a **searching indicator 312**, which searching indicator 312 will be further explained below.
**(e)** The markers 3 of the illustrated embodiment are continuously arranged, and each has the form of two 2-dimensional lines; one line incorporating an arrowhead and the other incorporating an exemplifying dot of a second type. A guiding indicator 311 is here represented by an arrowhead, while a dot represents a searching indicator 312.
**(f)** The markers 3 of the shown embodiment are intermittently arranged, and each has the form of two 2-dimensional lines; one line incorporating an arrowhead and the other incorporating an exemplifying filled circle. A guiding indicator 311 is here represented by an arrowhead, while a filled circle represents a searching indicator 312.
**(g)** The markers 3 in the illustrated embodiment are intermittently arranged, and each has the form of a 3-dimensional pattern slightly protruding from the ground and/or floor of the parking area 1. A guiding indicator 311 is here represented by the marker itself 3, i.e. the guiding indicator 311 is identical to the marker 3.
**(h)** The markers 3 in the shown embodiment are continuously arranged, and each has the form of two 2-dimensional lines; each line incorporating an arrowhead. A guiding indicator 311 is here represented by both arrowheads of the marker 3.

As further shown in **Figure 3****,** which depicts a schematic block diagram illustrating a parking area guiding system 5 according to embodiments of the invention, the parking area guiding system 5 comprises a **sensor unit 10** and a **guiding unit 11.** The parking area guiding system 5 may optionally further comprise a **search initiation unit 12** and/or a **receiving unit 13.** Furthermore, the embodiments herein for autonomously guiding a vehicle 4 through a parking area 1 may be implemented through one or more processors, such as **a processor 14,** here denoted CPU, together with computer program code for performing the functions and actions of the embodiments herein. Said program code may also be provided as a computer program product, for instance in the form of a data carrier carrying computer program code for performing the embodiments herein when being loaded into the parking area guiding system 5. One such carrier may be in the form of a CD ROM disc. It is however feasible with other data carriers such as a memory stick. The computer program code may furthermore be provided as pure program code on a server and downloaded to the parking area guiding system 5.

The parking area guiding system 5 may further comprise a **memory 15** comprising one or more memory units. The memory 15 may be arranged to be used to store e.g. information, and further to store data, configurations, schedulings, and applications, to perform the methods herein when being executed in the parking area guiding system 5. The processor 14, the memory 15, the sensor unit 10, the guiding unit 11, the optional search initiation unit 12 and the optional receiving unit 13 may for instance be implemented in one or several arbitrary **nodes 16.** A node 16 may be an electronic control unit (ECU) or any suitable generic electronic device. Those skilled in the art will also appreciate that the sensor unit 10, the guiding unit 11, the optional search initiation unit 12 and the optional receiving unit 13 described above, and which will be described in more detail later on in this description, may refer to a combination of analog and digital circuits, and/or one or more processors configured with software and/or firmware, e.g. stored in a memory such as the memory 15, that when executed by the one or more processors such as the processor 14 perform as will be described in more detail later on. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

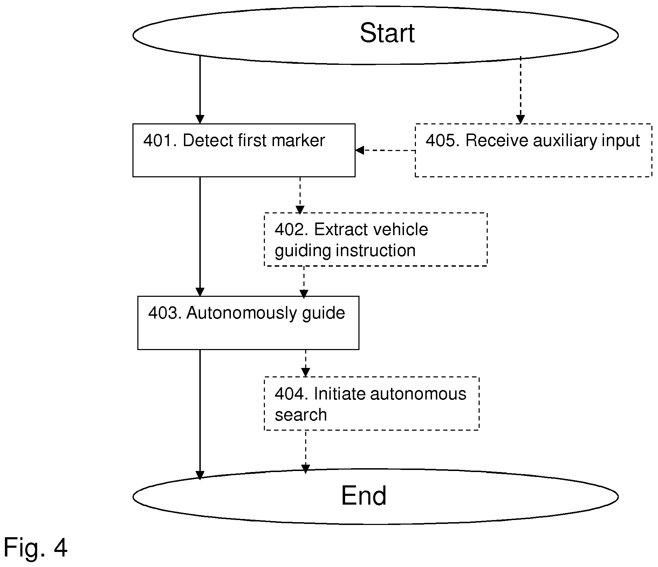

**Figure 4** is a flowchart depicting an exemplifying method for autonomously guiding a vehicle 4 through a parking area 1 according to embodiments of the disclosure. The method is performed by the parking area guiding system 5 of the autonomous vehicle 4 for autonomously guiding the vehicle 4 through the parking area 1 comprising at least one parking space 6, along at least a segment 21 of the predefined track 2 comprising one or several markers 3 continuously and/or intermittently arranged on a floor and/or the ground of the parking area 1. The track 2 may range from a vehicle entry section 7 to a vehicle exit section 8 of the parking area 1. Additionally, at least some of the markers 3 may be visually detectable to a human eye. Furthermore, at least some of the markers 3 may be distributed to form one or several continuous and/or intermittent straight and/or curved lines, which markers 3, if intermittently distributed, preferably are separated by a maximum distance of 2 meters, more preferred a maximum distance of 1 meter, and most preferred a maximum distance of 30 cm. Additionally, at least some of the markers 3 are 2-dimensional, e.g. comprising paint provided on the floor and/or the ground.

The exemplifying method, which may be continuously repeated, comprises the following actions discussed with support from Figures 1-3. The actions may be taken in any suitable order.

### Action 401

In Action 401, the parking area guiding system 5 detects, by means of the sensor unit 10 comprised in the parking area guiding system 5, at least one selected marker 31 associated with the selected segment 211 of the track 2. The selected marker 31 comprises a guiding indicator 311 indicating a vehicle guiding instruction for the selected segment 211.

The sensor unit 10 may comprise at least one vision sensor, e.g. a camera.

### Action 402

In optional Action 402, the parking area guiding system 5 may extract the vehicle guiding instruction from the guiding indicator 311.

### Action 403

In Action 403, the parking area guiding system 5 autonomously guides, by means of the guiding unit 11 comprised in the parking area guiding system 5, the autonomous vehicle 4 along the selected segment 211 based on the guiding indicator 311.

### Action 404

The selected marker 31 may further comprise the searching indicator 312 indicating a parking space searching instruction for the selected segment 211. Accordingly, in optional Action 404, the parking area guiding system 5 may initiate an autonomous search for an available parking space 6, by means of the search initiation unit 12 comprised in the parking area guiding system 5, based on the searching indicator 312.

### Action 405

In optional Action 405, the parking area guiding system 5 may receive, by means of the receiving unit 13 comprised in the parking area guiding system 5, an auxiliary input, wherein the action of autonomously guiding 403 and/or the action of initiating an autonomous search 404 additionally may be based on the auxiliary input, which auxiliary input indicates preferences of the parking area 1.

Consequently, according to the autonomous guiding described in the foregoing, markers 3, which are continuously and/or intermittently arranged on the floor and/or the ground, may be detected, and subsequently instructions associated therewith extracted and followed in a convenient manner, as the vehicle navigates along the track 2.

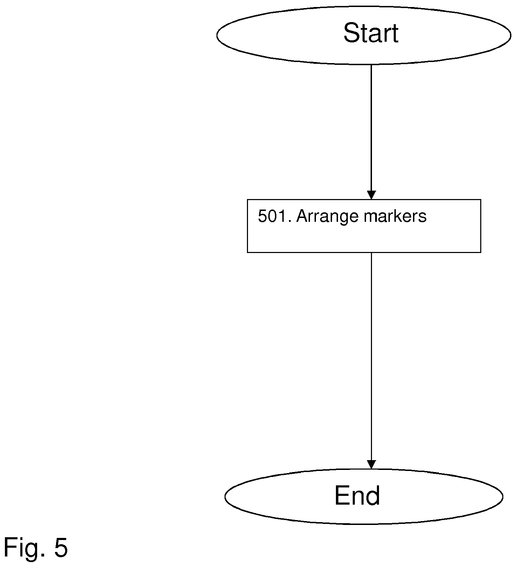

**Figure 5** is a flowchart depicting an exemplifying method for providing markers 3 on the floor and/or ground of the parking area 1 according to embodiments of the disclosure. The method, which for instance may be performed by a marker provision unit such as a paint provision arrangement providing paint patterns, provides one or several markers 3 on the floor and/or the ground of the parking area 1 comprising at least one parking space 6, for enabling for the autonomous vehicle 4 to be autonomously guided through the parking area 1 along at least a segment 21 of the predefined track 2 comprising the markers 3.

The exemplifying method, which may be continuously repeated, comprises the following action discussed with support from Figures 1-3.

### Action 501

In Action 501, e.g. the marker provision unit, arranges the markers 3 continuously and/or intermittently on the floor and/or the ground of the parking area 1. At least one selected marker 31 associated with a selected segment 211 of the track 2 comprises a guiding indicator 311 indicating a vehicle guiding instruction for the selected segment 211. The selected marker 31 enables for the autonomous vehicle 4 to be autonomously guided along the selected segment 21 based on the guiding indicator 311.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a parking area guiding system (5) of an autonomous vehicle (4) for autonomously guiding said vehicle (4) through a parking area (1) comprising at least one parking space (6), along at least a segment (21) of a predefined track (2) comprising one or several markers (3), which markers (3) are markings and/or bumps, **characterizedin that** said one or several markers (3) are continuously and/or intermittently arranged on a floor and/or the ground of said parking area (1) along said predefined track (2), said method comprising:
*detecting visually* (401), by means of a sensor unit (10) comprised in said parking area guiding system (5), at least one selected marker (31) associated with a selected segment (211) of said track (2), wherein said selected marker (31) comprises a guiding indicator (311) indicating a vehicle guiding instruction for said selected segment (211), said vehicle guiding instruction indicating an intended navigational direction for said selected segment (211); and
*autonomously guiding* (403), by means of a guiding unit (11) comprised in said parking area guiding system (5), said autonomous vehicle (4) along said selected segment (211) based on said guiding indicator (311).

2. The method according to claim 1, wherein said track (2) ranges from a vehicle entry section (7) to a vehicle exit section (8) of said parking area (1).

3. The method according to any one of claim 1 or 2, wherein said sensor unit (10) comprises at least one vision sensor, e.g. a camera.

4. The method according to any one of claims 1 to 3, wherein at least some of said markers (3) are visually detectable to a human eye.

5. The method according to any one of claims 1 to 4, wherein at least some of said markers (3) are distributed to form one or several continuous and/or intermittent straight and/or curved lines, which markers (3), if intermittently distributed, preferably are separated by a maximum distance of 2 meters, more preferred a maximum distance of 1 meter, and most preferred a maximum distance of 30 cm.

6. The method according to any one of claims 1 to 5, wherein at least some of said markers (3) are 2-dimensional, e.g. comprising paint provided on said floor and/or said ground.

7. The method according to any one of claims 1 to 6, wherein said selected marker (31) further comprises a searching indicator (312) indicating a parking space searching instruction for said selected segment (211).

8. The method according to claim 7, said method further comprising:
*initiating* (404) an autonomous search for an available parking space (6), by means of a search initiation unit (12) comprised in said parking area guiding system (5), based on said searching indicator (312).

9. The method according to any one of claims 1 to 8, further comprising:
*receiving* (405), by means of a receiving unit (13) comprised in said parking area guiding system (5), an auxiliary input, wherein said *autonomously guiding* (403) and/or said *initiating* an autonomous search (404) additionally is based on said auxiliary input, said auxiliary input indicating preferences of said parking area (1).

10. A **parking area guiding system** (5) of an autonomous vehicle (4) for autonomously guiding said vehicle (4) through a parking area (1) comprising at least one parking space (6), along at least a segment (21) of a predefined track (2) comprising one or several markers (3), which markers (3) are markings and/or bumps, **characterized in that** said one or several markers (3) are continuously and/or intermittently arranged on a floor and/or the ground of said parking area (1) along said predefined track (2), said parking area guiding system (5) comprising:
a **sensor unit** (10) adapted for *visually detecting* at least one selected marker (31) associated with a selected segment (211) of said track (2), wherein said selected marker (31) comprises a guiding indicator (311) indicating a vehicle guiding instruction for said selected segment (211), said vehicle guiding instruction indicating an intended navigational direction for said selected segment (211); and
a **guiding unit** (11) adapted for *autonomously guiding* (403) said autonomous vehicle (4) along said selected segment (211) based on said guiding indicator (311).

11. The parking area guiding system (5) according to claim 10, wherein said sensor unit (10) comprises at least one vision sensor, e.g. a camera.

12. The parking area guiding system (5) according to any one of claim 10 or 11, said parking area guiding system (5) further comprising:
a **search initiation unit** (12) adapted for *initiating* (404) an autonomous search for an available parking space (6), based on said searching indicator (312).

13. The parking area guiding system (5) according to any one of claims 10 to 12, said parking area guiding system (5) further comprising:
a **receiving unit** (13) adapted for *receiving* (405) an auxiliary input, wherein said *autonomously guiding* (403) and/or said *initiating* an autonomous search (404) additionally is based on said auxiliary input, said auxiliary input indicating preferences of said parking area (1).

14. An autonomous vehicle (4) comprising the parking area guiding system (5) according to any one of claims 10 to 13.

15. A method of providing one or several markers (3) on a floor and/or the ground of a parking area (1) comprising at least one parking space (6), for enabling for an autonomous vehicle (4) to be autonomously guided through said parking area (1) along at least a segment (21) of a predefined track (2) comprising said markers (3) by visually detecting at least one of said markers (3), said method **characterized in** comprising:
*arranging* (501) said markers (3), which markers (3) are markings and/or bumps, continuously and/or intermittently on said floor and/or said ground along said predefined track (2), wherein at least one selected marker (31) associated with a selected segment (211) of said track (2) comprises a guiding indicator (311) indicating a vehicle guiding instruction for said selected segment (211), said vehicle guiding instruction indicating an intended navigational direction for said selected segment (211), said selected marker (31) enabling for said autonomous vehicle (4) to be autonomously guided along said selected segment (211) based on said guiding indicator (311).

## Patentansprüche

1. Verfahren, das von einem Parkplatzführungssystem (5) eines autonomen Fahrzeugs (4) zur autonomen Führung des Fahrzeugs (4) durch einen Parkplatz (1) mit mindestens einer Parklücke (6) entlang mindestens eines Segments (21) einer vordefinierten Spur (2) durchgeführt wird, die eine oder mehrere Kennzeichnungen (3) umfasst, wobei die Kennzeichnungen (3) Markierungen und/oder Bodenwellen sind, **dadurch gekennzeichnet, dass** die eine oder mehreren Kennzeichnungen (3) kontinuierlich und/oder unterbrochen auf einem Fußboden und/oder dem Boden des Parkplatzes (1) entlang der vordefinierten Spur (2) angeordnet sind, wobei das Verfahren umfasst:
*optisches Detektieren* (401), durch eine Sensoreinheit (10), die in dem Parkplatzführungssystem (5) enthalten ist, mindestens einer ausgewählten Kennzeichnung (31), die einem ausgewählten Segment (211) der Spur (2) zugeordnet ist, wobei die ausgewählte Kennzeichnung (31) einen Führungsindikator (311) umfasst, der eine Fahrzeugführungsanweisung für das ausgewählte Segment (211) anzeigt, wobei die Fahrzeugführungsanweisung eine beabsichtigte Navigationsrichtung für das ausgewählte Segment (211) anzeigt; und
*autonomes Führen* (403), durch eine Führungseinheit (11), die in dem Parkplatzführungssystem (5) enthalten ist, des autonomen Fahrzeugs (4) entlang des ausgewählten Segments (211) basierend auf dem Führungsindikator (311) .

2. Verfahren nach Anspruch 1, wobei die Spur (2) von einem Fahrzeugeingangsabschnitt (7) zu einem Fahrzeugausgangsabschnitt (8) des Parkplatzes (1) reicht.

3. Verfahren nach einem der Ansprüche 1 oder 2, wobei die Sensoreinheit (10) mindestens einen optischen Sensor, z. B. eine Kamera, umfasst.

4. Verfahren nach einem der Ansprüche 1 bis 3, wobei mindestens einige der Kennzeichnungen (3) für ein menschliches Auge optisch detektierbar sind.

5. Verfahren nach einem der Ansprüche 1 bis 4, wobei mindestens einige der Kennzeichnungen (3) verteilt sind, um eine oder mehrere kontinuierliche und/oder unterbrochene gerade und/oder gekrümmte Linien zu bilden, wobei die Kennzeichnungen (3), wenn sie unterbrochen verteilt sind, vorzugsweise durch einen maximalen Abstand von 2 Metern, stärker bevorzugt durch einen maximalen Abstand von 1 Meter und am meisten bevorzugt durch einen maximalen Abstand von 30 cm voneinander getrennt sind.

6. Verfahren nach einem der Ansprüche 1 bis 5, wobei mindestens einige der Kennzeichnungen (3) zweidimensional sind, z. B. umfassend Farbe, die auf dem Fußboden und/oder dem Boden bereitgestellt ist.

7. Verfahren nach einem der Ansprüche 1 bis 6, wobei die ausgewählte Kennzeichnung (31) ferner einen Suchindikator (312) umfasst, der eine Parklückensuchanweisung für das ausgewählte Segment (211) anzeigt.

8. Verfahren nach Anspruch 7, wobei das Verfahren ferner umfasst:
*Initiieren* (404) einer autonomen Suche nach einer verfügbaren Parklücke (6) mittels einer Suchinitiierungseinheit (12), die in dem Parkplatzführungssystem (5) enthalten ist, basierend auf dem Suchindikator (312).

9. Verfahren nach einem der Ansprüche 1 bis 8, ferner umfassend:
*Empfangen* (405) einer Hilfseingabe mittels einer in dem Parkplatzführungssystem (5) enthaltenen Empfangseinheit (13), wobei das *autonome Führen* (403) und/oder das *Initiieren* einer autonomen Suche (404) zusätzlich auf der Hilfseingabe basiert, wobei die Hilfseingabe Präferenzen des Parkplatzes (1) anzeigt.

10. **Parkplatzführungssystem** (5) eines autonomen Fahrzeugs (4) zur autonomen Führung des Fahrzeugs (4) durch einen Parkplatz (1) mit mindestens einer Parklücke (6) entlang mindestens eines Segments (21) einer vordefinierten Spur (2), die eine oder mehrere Kennzeichnungen (3) umfasst, wobei die Kennzeichnungen (3) Markierungen und/oder Bodenwellen sind, **dadurch gekennzeichnet, dass** die eine oder mehreren Kennzeichnungen (3) kontinuierlich und/oder unterbrochen auf einem Fußboden und/oder dem Boden des Parkplatzes (1) entlang der vordefinierten Spur (2) angeordnet sind, wobei das Parkplatzführungssystem (5) umfasst:
eine **Sensoreinheit** (10), die zum *optischen Detektieren* mindestens einer ausgewählten Kennzeichnung (31) ausgeführt ist, die einem ausgewählten Segment (211) der Spur (2) zugeordnet ist, wobei die ausgewählte Kennzeichnung (31) einen Führungsindikator (311) aufweist, der eine Fahrzeugführungsanweisung für das ausgewählte Segment angibt (211), wobei die Fahrzeugführungsanweisung eine beabsichtigte Navigationsrichtung für das ausgewählte Segment (211) anzeigt; und
eine **Führungseinheit** (11), die zum *autonomen Führen* (403) des autonomen Fahrzeugs (4) entlang des ausgewählten Segments (211) basierend auf dem Führungsindikator (311) ausgeführt ist.

11. Parkplatzführungssystem (5) nach Anspruch 10, wobei die Sensoreinheit (10) mindestens einen optischen Sensor, z. B. eine Kamera, umfasst.

12. Parkplatzführungssystem (5) nach einem der Ansprüche 10 oder 11, wobei das Parkplatzführungssystem (5) ferner umfasst:
eine **Suchinitiierungseinheit** (12), die zum *Initiieren* (404) einer autonomen Suche nach einer verfügbaren Parklücke (6) basierend auf dem Suchindikator (312) ausgeführt ist.

13. Parkplatzführungssystem (5) nach einem der Ansprüche 10 bis 12, wobei das Parkplatzführungssystem (5) ferner umfasst:
eine **Empfangseinheit** (13), die zum *Empfangen* (405) eines Hilfseingangs ausgeführt ist, wobei das *autonome Führen* (403) und/oder das *Initiieren* einer autonomen Suche (404) zusätzlich auf dem Hilfseingang basiert, wobei der Hilfseingang Präferenzen des Parkplatzes (1) anzeigt.

14. Autonomes Fahrzeug (4) umfassend das Parkplatzführungssystem (5) nach einem der Ansprüche 10 bis 13.

15. Verfahren zum Bereitstellen einer oder mehrerer Kennzeichnungen (3) auf einem Fußboden und/oder dem Boden eines Parkplatzes (1) mit mindestens einer Parklücke (6), um einem autonomen Fahrzeug (4) zu ermöglichen, autonom durch den Parkplatz (1) entlang mindestens eines Segments (21) einer vordefinierten Spur (2), die die Kennzeichnungen (3) umfasst, durch optisches Detektieren mindestens einer der Kennzeichnungen (3) geführt zu werden, wobei das Verfahren **dadurch gekennzeichnet ist, dass** es umfasst:
*Anordnen* (501) der Kennzeichnungen (3), wobei die Kennzeichnungen (3) Markierungen und/oder Bodenwellen sind, die kontinuierlich und/oder unterbrochen auf dem Fußboden und/oder dem Boden entlang der vordefinierten Spur (2) angeordnet sind, wobei mindestens eine ausgewählte Kennzeichnung (31), die einem ausgewählten Segment (211) der Spur (2) zugeordnet ist, einen Führungsindikator (311) umfasst, der eine Fahrzeugführungsanweisung für das ausgewählte Segment (211) angibt, wobei die Fahrzeugführungsanweisung eine beabsichtigte Navigationsrichtung für das ausgewählte Segment (211) anzeigt, wobei die ausgewählte Kennzeichnung (31) dem autonomen Fahrzeug (4) ermöglicht, autonom entlang des ausgewählten Segments (211) basierend auf dem Führungsindikator (311) geführt zu werden.

## Revendications

1. Procédé effectué par un système de guidage sur aire de stationnement (5) d'un véhicule autonome (4) pour guider de façon autonome ledit véhicule (4) à travers une aire de stationnement (1) comprenant au moins une place de stationnement (6), le long d'au moins un segment (21) d'une voie prédéfinie (2) comprenant un ou plusieurs repères (3), lesquels repères (3) sont des marques et/ou des plots, **caractérisé en ce que** ledit ou lesdits repères (3) sont agencés de façon continue et/ou intermittente sur une plate-forme et/ou le sol de ladite aire de stationnement (1) le long de ladite voie prédéfinie (2), ledit procédé comprenant :
la détection *visuelle* (401), au moyen d'une unité de capteurs (10) comprise dans ledit système de guidage sur aire de stationnement (5), d'au moins un repère sélectionné (31) associé à un segment sélectionné (211) de ladite voie (2), ledit repère sélectionné (31) comprenant un indicateur de guidage (311) indiquant une instruction de guidage de véhicule pour ledit segment sélectionné (211), ladite instruction de guidage de véhicule indiquant une direction de navigation prévue pour ledit segment sélectionné (211) ; et
le *guidage autonome* (403), au moyen d'une unité de guidage (11) comprise dans ledit système de guidage sur aire de stationnement (5), dudit véhicule autonome (4) le long dudit segment sélectionné (211) sur la base dudit indicateur de guidage (311).

2. Procédé selon la revendication 1, dans lequel ladite voie (2) va d'une section d'entrée de véhicule (7) à une section de sortie du véhicule (8) de ladite aire de stationnement (1).

3. Procédé selon l'une quelconque des revendications 1 ou 2, dans lequel ladite unité de capteurs (10) comprend au moins un capteur de vision, par ex. une caméra.

4. Procédé selon l'une quelconque des revendications 1 à 3, dans lequel au moins certains desdits repères (3) sont détectables visuellement par un oeil humain.

5. Procédé selon l'une quelconque des revendications 1 à 4, dans lequel au moins certains desdits repères (3) sont distribués pour former une ou plusieurs lignes droites et/ou courbes continues et/ou intermittentes, lesquels repères (3), s'ils sont distribués de façon intermittente, sont de préférence séparés par une distance maximale de 2 mètres, mieux encore une distance maximale de 1 mètre, et idéalement une distance maximale de 30 cm.

6. Procédé selon l'une quelconque des revendications 1 à 5, dans lequel au moins certains desdits repères (3) sont bidimensionnels, par ex. comprenant de la peinture appliquée sur ladite plate-forme et/ou ledit sol.

7. Procédé selon l'une quelconque des revendications 1 à 6, dans lequel ledit repère sélectionné (31) comprend en outre un indicateur de recherche (312) indiquant une instruction de recherche de place de stationnement pour ledit segment sélectionné (211).

8. Procédé selon la revendication 7, ledit procédé comprenant en outre :
le *lancement* (404) d'une recherche autonome pour une place de stationnement disponible (6), au moyen d'une unité de lancement de recherche (12) comprise dans ledit système de guidage sur aire de stationnement (5), sur la base dudit indicateur de recherche (312).

9. Procédé selon l'une quelconque des revendications 1 à 8, comprenant en outre :
la *réception* (405), au moyen d'une unité de réception (13) comprise dans ledit système de guidage sur aire de stationnement (5), d'une entrée auxiliaire, ledit *guidage autonome* (403) et/ou ledit *lancement* d'une recherche autonome (404) étant également basés sur ladite entrée auxiliaire, ladite entrée auxiliaire indiquant des préférences de ladite aire de stationnement (1).

10. **Système de guidage sur aire de stationnement** (5) d'un véhicule autonome (4) destiné à guider de façon autonome ledit véhicule (4) à travers une aire de stationnement (1) comprenant au moins une place de stationnement (6), le long d'au moins un segment (21) d'une voie prédéfinie (2) comprenant un ou plusieurs repères (3), lesquels repères (3) sont des marques et/ou des plots, **caractérisé en ce que** ledit ou lesdits repères (3) sont agencés de façon continue et/ou intermittente sur une plate-forme et/ou le sol de ladite aire de stationnement (1) le long de ladite voie prédéfinie (2), ledit système de guidage sur aire de stationnement (5) comprenant :
une **unité de capteurs** (10) adaptée pour détecter *visuellement* au moins un repère sélectionné (31) associé à un segment sélectionné (211) de ladite voie (2), ledit repère sélectionné (31) comprenant un indicateur de guidage (311) indiquant une instruction de guidage de véhicule pour ledit segment sélectionné (211), ladite instruction de guidage de véhicule indiquant une direction de navigation prévue pour ledit segment sélectionné (211) ; et
une **unité de guidage** (11) adapté pour *guider de façon autonome* (403) ledit véhicule autonome (4) le long dudit segment sélectionné (211) sur la base dudit indicateur de guidage (311).

11. Système de guidage sur aire de stationnement (5) selon la revendication 10, dans lequel ladite unité de capteurs (10) comprend au moins un capteur de vision, par ex. une caméra.

12. Système de guidage sur aire de stationnement (5) selon l'une quelconque des revendications 10 ou 11, ledit système de guidage sur aire de stationnement (5) comprenant en outre :
une **unité de lancement de recherche** (12) adaptée pour *lancer* (404) une recherche autonome pour une place de stationnement disponible (6), sur la base dudit indicateur de recherche (312).

13. Système de guidage sur aire de stationnement (5) selon l'une quelconque des revendications 10 à 12, ledit système de guidage sur aire de stationnement (5) comprenant en outre :
une **unité de réception** (13) adaptée pour *recevoir* (405) une entrée auxiliaire, ledit *guidage autonome* (403) et/ou ledit *lancement* d'une recherche autonome (404) étant également basés sur ladite entrée auxiliaire, ladite entrée auxiliaire indiquant des préférences de ladite aire de stationnement (1).

14. Véhicule autonome (4) comprenant le système de guidage sur aire de stationnement (5) selon l'une quelconque des revendications 10 à 13.

15. Procédé destiné à appliquer un ou plusieurs repères (3) sur une plate-forme et/ou le sol d'une aire de stationnement (1) comprenant au moins une place de stationnement (6), pour permettre à un véhicule autonome (4) d'être guidé de façon autonome à travers ladite aire de stationnement (1) le long d'au moins un segment (21) d'une voie prédéfinie (2) comprenant lesdits repères (3) en détectant visuellement au moins un desdits repères (3), ledit procédé étant **caractérisé en ce qu'**il comprend :
l'*agencement* (501) desdits repères (3), lesquels repères (3) sont des marques et/ou des plots, de façon continue et/ou intermittente sur ladite plate-forme et/ou ledit sol le long de ladite voie prédéfinie (2), au moins un repère sélectionné (31) associé à un segment sélectionné (211) de ladite voie (2) comprenant un indicateur de guidage (311) indiquant une instruction de guidage de véhicule pour ledit segment sélectionné (211), ladite instruction de guidage de véhicule indiquant une direction de navigation prévue pour ledit segment sélectionné (211), ledit repère sélectionné (31) permettant audit véhicule autonome (4) d'être guidé de façon autonome le long dudit segment sélectionné (211) sur la base dudit indicateur de guidage (311).
